(19) Europäisches Patentamt
European Patent Office
Office européen des brevets

(11) **EP 2 566 652 B1**

(12) **EUROPÄISCHE PATENTSCHRIFT**

(45) Veröffentlichungstag und Bekanntmachung des Hinweises auf die Patenterteilung:
**14.06.2017 Patentblatt 2017/24**

(21) Anmeldenummer: **11718086.9**

(22) Anmeldetag: **05.05.2011**

(51) Int Cl.:
**B23K 20/10** (2006.01)    **B29C 65/08** (2006.01)

(86) Internationale Anmeldenummer:
**PCT/EP2011/057219**

(87) Internationale Veröffentlichungsnummer:
**WO 2011/138404 (10.11.2011 Gazette 2011/45)**

(54) **ULTRASCHALL-SCHWEISSVORRICHTUNG UND VERFAHREN ZUR HERSTELLUNG EINER SCHWEISSVERBINDUNG MITTELS ULTRASCHALL**

ULTRASONIC WELDING DEVICE AND METHOD OF BONDING BY MEANS OF AN ULTRASONIC WAVE

DISPOSITIF ET MÉTHODE DE SOUDAGE PAR ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.05.2010 DE 102010028765
27.05.2010 DE 102010029395**

(43) Veröffentlichungstag der Anmeldung:
**13.03.2013 Patentblatt 2013/11**

(73) Patentinhaber: **Telsonic Holding AG
9552 Bronschhofen (CH)**

(72) Erfinder: **BÜTTIKER, Albert
9533 Kirchberg SG (CH)**

(74) Vertreter: **Hepp Wenger Ryffel AG
Friedtalweg 5
9500 Wil (CH)**

(56) Entgegenhaltungen:
**DE-A1-102008 002 744    US-A- 5 603 444
US-A1- 2003 155 403    US-A1- 2010 040 903**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine Torsionssonotrode, eine Ultraschall-Schweißvorrichtung sowie ein Verfahren zur Herstellung einer Schweißverbindung mittels Ultraschall.

Die Erfindung betrifft allgemein das Gebiet des Ultraschallschweißens. Sie betrifft insbesondere das Gebiet des Ultraschallschweißens von metallischen Bauteilen. Dabei werden die Bauteile durch die Wirkung einer Ultraschallschwingung im Wesentlichen parallel zu einer Schweißfläche relativ zueinander bewegt, wobei gleichzeitig senkrecht dazu ein Druck bzw. eine Schweißkraft auf die zu verbindenden Bauteile ausgeübt wird. Die Ultraschallschwingung ermöglicht das Aufreißen und Verdrängen der meist auf Teiloberflächen vorhandenen Kontaminations- und Oxidschichten. Der sich daraus ergebende direkte Kontakt der reinen Metalloberflächen führt zu einer dauerhaften stoffschlüssigen Verbindung der metallischen Bauteile.

Aus der US 3,039,333 ist eine Ultraschall-Schweißvorrichtung bekannt, bei der eine stabförmige Sonotrode mittels radial sich davon erstreckender Koppler an zwei Konverter gekoppelt ist. Eine gegen die zu verbindenden Bauteile gedrückte Arbeitsfläche der Sonotrode wird dabei im Wesentlichen parallel zur Schweißfläche entlang eines geradlinigen Wegs hin und her bewegt.

Die US 5,603,444 offenbart eine Ultraschall-Schweißvorrichtung mit einer Longitudinalsonotrode, deren Arbeitsfläche ebenfalls entlang eines geraden Wegs hin und her bewegt wird. Die Longitudinalsonotrode ist in herkömmlicher Weise über Schraubverbindungen und unter Zwischenschaltung eines Boosters mit einem Konverter verbunden. Ferner ist eine Druckeinrichtung zur Erzeugung eines Drucks auf die Arbeitsfläche vorgesehen. Der von der Druckeinrichtung erzeugte Druck wird über die Knotenlinien der Longitudinalsonotrode aufgebracht. - In der Praxis hat es sich herausgestellt, dass die vom Konverter bereitgestellte Ultraschallleistung nur zu einem Bruchteil auf die Arbeitsfläche übertragen wird. Nach neueren Erkenntnissen ist das darauf zurückzuführen, dass es infolge der auf die Arbeitsfläche ausgeübten Druckkraft zu Kippbewegungen der aneinander liegenden Fügeflächen zwischen der Longitudinalsonotrode und dem Booster sowie zwischen dem Booster und dem Konverter kommt. Dieser Effekt nimmt mit zunehmendem Druck zu.

Die EP 1 930 148 A1 offenbart eine Ultraschall-Schweißvorrichtung unter Verwendung einer sogenannten Torsionssonotrode. Es handelt sich dabei um eine im Wesentlichen rotationssymmetrisch ausgebildete Sonotrode, an deren einer Stirnseite die Arbeitsfläche vorgesehen ist. In der Nähe der anderen Stirnseite sind an eine Umfangsfläche der Torsionssonotrode Konverter gekoppelt, mit denen eine um eine Torsionsachse gerichtete Schwingung auf die Torsionssonotrode übertragen wird. Infolgedessen bewegt sich die gegen die zu verbindenden Bauteile gedrückte Arbeitsfläche auf einer zum Umfang der Torsionssonotrode korrespondierenden Bogenlinie hin und her. Nachteilig dabei ist es, dass eine auf die zu verbindenden Bauteile übertragene Leistung in einem radial innen liegenden Abschnitt der Arbeitsfläche kleiner ist als in einem radial außen liegenden Abschnitt der Arbeitsfläche. Infolgedessen ist die Schweißverbindung zwischen den zu verbindenden Bauteilen ungleichmäßig.

Aufgabe der Erfindung ist es, die Nachteile nach dem Stand der Technik zu beseitigen. Es soll insbesondere eine Sonotrode angegeben werden, mit der mit verbesserter Effizienz die vom Konverter bereitgestellte Leistung auf die Arbeitsfläche übertragen werden kann. Die verbesserte Effizienz der Leistungsübertragung soll insbesondere auch bei der Ausübung eines hohen Drucks erreicht werden. Nach einem weiteren Ziel der Erfindung sollen eine Ultraschall-Schweißvorrichtung sowie ein Verfahren zur Herstellung einer Schweißverbindung mittels Ultraschall angegeben werden, welche eine effiziente und gleichmäßige Herstellung einer Schweißverbindung zwischen zu verbindenden Bauteilen ermöglichen.

Diese Aufgabe wird durch die Merkmale der Ansprüche 1 und 15 gelöst. Zweckmäßige Ausgestaltungen der Erfindung ergeben sich aus den Merkmalen der Ansprüche 2 bis 14. Nach Maßgabe der Erfindung wird eine Ultraschall-Schweißvorrichtung vorgeschlagen, die eine Torsionssonotrode mit zwei einander gegenüberliegenden Stirnseiten und einer eine Torsionsachse umgebenden Umfangsfläche umfasst, an der zumindest eine Arbeitsfläche mit einem radialen Abstand von der Torsionsachse vorgesehen ist. Erfindungsgemäß befindet sich die Arbeitsfläche in Abkehr vom Stand der Technik nicht mehr an einer der Stirnseiten, sondern an der die Torsionsachse umgebenden Umfangsfläche. Infolgedessen weisen sämtliche Flächenelemente der Arbeitsfläche im Wesentlichen denselben radialen Abstand zur Torsionsachse auf. Es kann über einen wesentlichen Abschnitt der Arbeitsfläche hinweg eine gleichmäßige Leistung auf die zu verschweißenden Bauteile übertragen werden. Eine mit der erfindungsgemäßen Sonotrode hergestellte Schweißverbindung ist gleichmäßig.

Ferner ermöglicht die vorgeschlagene Torsionssonotrode eine im Wesentlichen verlustfreie Übertragung der vom Konverter bereitgestellten Leistung auf die Arbeitsfläche. Es treten dabei keine Kippbewegungen an den Fügeflächen zwischen der Torsionssonotrode, einem eventuell vorgesehenen Booster und dem Konverter auf. Die Arbeitsfläche führt eine torsionale Bewegung um die Torsionsachse, nicht jedoch eine longitudinale Bewegung parallel zur Torsionsachse aus. - Die vorgeschlagene Torsionssonotrode eignet sich insbesondere zur Herstellung einer Schweißverbindung zwischen metallischen Bauteilen, beispielsweise zwischen einer Litze und einem Stecker.

Bei einer geeigneten Anregung der vorgeschlagenen Torsionssonotrode mit Ultraschall treten kleine oder keine Wesentlichen Dehnungen in der Axialrichtung, sondern durch den Torsionsmodul G zu beschreibende Verdrillungen in der Querrichtung, auf. Für die Frequenz der Torsionsschwingung gilt:

$$v_n = \frac{n}{2l}\sqrt{\frac{G}{\rho}}$$

wobei n eine ganze Zahl > 0 ist,
1 die axiale Länge der Torsionselektrode und
$\rho$ die Dichte der Torsionssonotrode ist.

Eine axiale Länge 1 der Torsionssonotrode wird zweckmäßigerweise so gewählt, dass diese bei einer vorgegebenen Frequenz $v_n$ eine stehende Schwingung bzw. Eigenschwingung mit der Wellenlänge $\lambda$ ausführt. In diesem Fall ist die Arbeitsfläche mittig an der Umfangsfläche vorgesehen. - Grundsätzlich ist es aber möglich, eine axiale Länge 1 der Torsionssonotrode bezüglich einer vorgegebenen Frequenz $v_n$ so zu wählen, dass damit Eigenschwingungen der Wellenlänge $n\lambda/2$ erzeugbar sind, wobei n eine ganze Zahl > 0 ist. D. h. eine Länge 1 der Torsionssonotrode kann auch $\lambda/2$, $3\lambda/2$, $2\lambda$ usw. betragen.

Nach der Erfindung weist die Torsionssonotrode an der Umfangsfläche beidseits der zumindest einen Arbeitsfläche jeweils eine, vorzugsweise radial vorspringende, Ringfläche auf, welche bezüglich einer Wellenlänge einer Eigenschwingung der Torsionssonotrode auf einer Knotenlinie liegt. Zweckmäßigerweise ist eine axiale Länge 1 der Torsionssonotrode so gewählt, dass diese bei einer vorgegebenen Ultraschallfrequenz genau der Wellenlänge $\lambda$ der Eigenschwingung entspricht. In diesem Fall befinden sich die Knotenlinien etwa bei 1/4 und 3/4 der Länge 1 der Torsionssonotrode. Die Arbeitsfläche kann in diesem Fall zwischen den Knotenlinien angeordnet sein und befindet sich etwa bei 1/2 der Länge 1 der Torsionssonotrode.

Vorteilhafterweise ist die Torsionssonotrode bezüglich einer senkrecht durch die Torsionsachse verlaufenden Symmetrieebene symmetrisch ausgebildet. Nach einer besonders vorteilhaften Ausgestaltung ist eine Kontur bzw. ein Umriss der Arbeitsfläche bezüglich der Symmetrieebene symmetrisch ausgebildet. Insbesondere kann es so sein, dass die Symmetrieebene durch die zumindest eine Arbeitsfläche verläuft und die Arbeitsfläche symmetrisch bezüglich der Symmetrieebene ist. Eine solche Ausgestaltung der Torsionssonotrode ist besonders einfach. Dabei ist die zumindest eine Arbeitsfläche mittig bezüglich der axialen Länge 1 der Torsionssonotrode an deren Umfangsfläche angeordnet.

Nach einer weiteren vorteilhaften Ausgestaltung weist die Torsionssonotrode ein die zumindest eine Arbeitsfläche umfassendes Mittelteil auf, welches lösbar mit beidseits davon sich erstreckenden, jeweils eine der Stirnseiten aufweisenden Endstücken verbunden ist. Dabei kann jedes der Endstücke eine Ringfläche aufweisen. Eine Verbindung zwischen den Endstücken und dem Mittelteil kann beispielsweise eine Schraubverbindung sein. Es kann auch sein, dass die beiden Endstücke unmittelbar miteinander, beispielsweise mittels einer Schraubverbindung, verbunden werden und das Mittelteil als Ring ausgebildet ist, welcher auf die verbundenen Endstücke aufgeschrumpft wird. - Das Vorsehen eines die Arbeitsflächen umfassendes Mittelteils ermöglicht es, eine Arbeitsflächengeometrie durch einen Austausch des Mittelteils zu ändern. Im Falle einer Beschädigung einer Arbeitsfläche kann eine Reparatur der Torsionssonotrode ebenfalls einfach durch einen Austausch des Mittelteils vorgenommen werden.

Nach einer weiteren vorteilhaften Ausgestaltung ist die Arbeitsfläche mit einem vorgegebenen Radius in Umfangsrichtung gekrümmt. Zweckmäßigerweise hat der Radius seinen Ursprung in der Torsionsachse, d. h. in diesem Fall liegt die Arbeitsfläche also auf einem Umfang um die Torsionsachse.

Nach einer weiteren vorteilhaften Ausgestaltung ist die Arbeitsfläche eine radial vorspringende, umlaufende Ring-Arbeitsfläche. Eine solche Ring-Arbeitsfläche ermöglicht besonders hohe Standzeiten der Torsionssonotrode. Sofern ein Abschnitt der Ring-Arbeitsfläche verbraucht ist, kann durch Verdrehen der Torsionssonotrode um einen vorgegebenen Winkelbetrag ein weiterer noch unverbrauchter Abschnitt der Ring-Arbeitsfläche zur Herstellung weiterer Schweißverbindungen bereitgestellt werden. Damit kann die mit der vorgeschlagenen Torsionssonotrode herstellbare Anzahl an Schweißverbindungen gegenüber herkömmlichen Sonotroden vervielfacht werden.

Nach einer weiteren vorteilhaften Ausgestaltung kann es auch sein, dass n Arbeitsflächen vorgesehen sind, welche gleichmäßig über den Umfang in einem Winkel von 360°/n angeordnet sind, wobei n eine ganze Zahl > 1 ist. In diesem Fall sind die Arbeitsflächen beispielsweise ambossartig ausgeführt und springen von einer Umfangsfläche der Torsionssonotrode radial vor. Es können beispielsweise 2, 3, 4, 5, 6, 7, 8 oder mehr derartige Arbeitsflächen vorgesehen sein. Das Vorsehen einer Vielzahl von Arbeitsflächen ermöglicht - ähnlich wie beim Vorsehen einer Ring-Arbeitsfläche - einen raschen Wechsel im Falle eines Verbrauchs einer Arbeitsfläche. Eine solche Torsionssonotrode hat eine besonders hohe Standzeit. Ein Wechsel von einer Arbeitsfläche auf eine andere Arbeitsfläche kann durch eine einfache Rotation der Torsionssonotrode erfolgen. Ein Austausch oder eine Demontage ist dazu nicht erforderlich.

Nach einer weiteren vorteilhaften Ausgestaltung weist die Arbeitsfläche eine Struktur, vorzugsweise Rillen, auf. Die Rillen können axial oder schräg bezüglich der Axialrichtung verlaufen. Sie können gekreuzt angeordnet sein. Ferner ist es nach einer vorteilhaften Ausgestaltung möglich, die Arbeitsfläche mit polykristallinem Diamant (PKD) zu beschichten. Eine solche PKD-Schicht kann beispielsweise auf die Arbeitsfläche aufgelötet werden. Damit kann die Haltbarkeit der Arbeitsfläche erhöht und/oder eine unerwünschte Verbindung beim Schweißen, insbesondere mit Aluminium, vermieden werden.

Mit der vorgeschlagenen. Ultraschall-Schweißvorrichtung gelingt die Übertragung einer hohen Leistung auf die zu verbindenden Bauteile, Es können damit relativ dicke metallische Bauteile in einer hervorragenden Qualität verschweißt werden.

Nach einer vorteilhaften Ausgestaltung ist der Konverter radial mit einem Torsionsschwingelement verbunden, welches an eine der Stirnseiten der Torsionssonotrode gekoppelt ist. Bei dem Torsionsschwingelement handelt es sich beispielsweise um einen zylindrischen Stab. Selbstverständlich ist es auch möglich, mehrere Konverter radial mit dem Torsionsschwingelement zur Erzeugung der Torsionsschwingung zu verbinden. Derartige Torsionsschwingeinrichtungen sind nach dem Stand der Technik an sich bekannt. Es wird verwiesen auf die EP 1 930 148 A1, welche in [0039] und [0040] sowie den Fig. 2 und 3 geeignete Torsionsschwingeinrichtungen offenbart. Der Offenbarungsgehalt des Dokuments wird insoweit einbezogen.

Nach einer weiteren vorteilhaften Ausgestaltung ist das Torsionsschwingelement unter Zwischenschaltung eines Boosters mit der Stirnseite der Torsionssonotrode verbunden. Der Booster hat die Funktion, die vom Konverter bereitgestellte Amplitude zu verändern und sie in die erfindungsgemäße Torsionssonotrode weiterzuleiten. Je nach Bauform des Boosters kann die Amplitude verkleinert oder vergrößert werden. In der Regel werden Booster verwendet, welche die vom Konverter bereitgestellte Amplitude vergrößern. Die Übersetzungen eines Boosters können beispielsweise 1:1,5 bis 1:2 betragen.

Nach einer weiteren Ausgestaltung kann ein weiterer Konverter zur Erzeugung einer um die Torsionsachse gerichteten Ultraschallschwingung an die andere der Stirnseiten der Torsionssonotrode gekoppelt sein. Der weitere Konverter kann radial mit einem weiteren Torsionsschwingelement verbunden sein, welches an die andere Stirnseite der Torsionssonotrode gekoppelt ist. Eine entsprechende weitere Torsionsschwingeinrichtung kann baugleich mit der vorgenannten Torsionsschwingeinrichtung ausgeführt sein. Es kann insbesondere auch sein, dass das weitere Torsionsschwingelement unter Zwischenschaltung eines weiteren Boosters mit der anderen Stirnseite der Torsionssonotrode verbunden ist. - Mit der vorgenannten Ausgestaltung gelingt es, besonders hohe Leistungen in die Torsionssonotrode einzukoppeln. Eine Phase der Schwingungen des Konverters und des weiteren Konverters und ggf. die Übersetzungsverhältnisse der Booster sind dabei so aufeinander abgestimmt, dass sich die jeweils eingekoppelten Leistungen ergänzen.

Nach der Erfindung ist eine Druckeinrichtung zur Erzeugung eines im Wesentlichen senkrecht zur Torsionsachse wirkenden Drucks auf die Arbeitsfläche vorgesehen. Dabei kann es sich beispielsweise um eine hydraulisch, pneumatisch oder elektrisch betriebene Druckeinrichtung handeln. Der Druck auf die Arbeitsfläche kann erzeugt werden, indem die Torsionssonotrode mit der daran vorgesehenen Arbeitsfläche gegen einen feststehenden Amboss bzw. die darauf aufliegenden zu verbindenden Bauteile gedrückt wird. Es kann aber auch sein, dass die Torsionssonotrode feststeht und der Amboss gegen die Arbeitsfläche gedrückt wird.

In jedem Fall ist es zweckmäßig, dass die Torsionssonotrode mit den daran vorgesehenen Ringflächen mit einer Stützvorrichtung abgestützt ist. Da die Ringflächen auf der Knotenlinie der Torsionssonotrode liegen, geht durch die vorgeschlagene Abstützung keine Leistung verloren.

Die Stützvorrichtung ist mit der Druckeinrichtung verbunden. Die Torsionssonotrode kann somit mit der Druckeinrichtung gegen einen feststehenden Amboss bewegt werden.

Nach weiterer Maßgabe der Erfindung wird ein Verfahren zur Herstellung einer Schweißverbindung mittels Ultraschall nach Anspruch 15 vorgeschlagen.

Nach einem wesentlichen Merkmal des erfindungsgemäßen Verfahrens beschreibt die Arbeitsfläche bezüglich der Unterlage eine pendelartige Bewegung um die Torsionsachse. Dabei bleibt eine senkrecht zur Torsionsachse stehende Schwingungsebene im Wesentlichen unverändert, d. h. die Arbeitsfläche bewegt sich nicht oder nur unwesentlich in einer Richtung parallel zur Torsionsachse. Mit dem vorgeschlagenen Verfahren kann eine besonders hohe Leistung auf die zu verbindenden Bauteile übertragen werden. Die Amplitude der Schwingung ist an allen Stellen der Arbeitsfläche gleich. Es gelingt damit, eine besonders homogene Schweißverbindung herzustellen.

Bei der Unterlage kann es sich um einen feststehenden Amboss handeln. Es ist allerdings auch möglich, dass die Unterlage nach Art einer weiteren erfindungsgemäßen Torsionssonotrode ausgebildet ist. In diesem Fall schwingen die Torsionssonotrode und die weitere Torsionssonotrode vorteilhafterweise gegenläufig. Damit kann ein Abstand zwischen der Arbeitsfläche der Torsionssonotrode und einer weiteren Arbeitsfläche der weiteren Torsionssonotrode im Wesentlichen konstant gehalten werden. Mit dieser Ausgestaltung kann eine noch wesentlich höhere Leistung auf die zu verschweißenden Bauteile übertragen werden. Die zu verschweißenden Bauteile können bei dieser Ausgestaltung mit einer bezüglich der Torsionssonotrode und der weiteren Torsionssonotrode feststehenden Halteeinrichtung gehalten werden, welche ein Ausweichen der miteinander zu verschweißenden Bauteile verhindert.

Nachfolgend wird ein Ausführungsbeispiel der Erfindung anhand der Zeichnungen näher erläutert. Es zeigen:

Fig. 1      eine perspektivische Ansicht einer ersten Torsionssonotrode,

Fig. 2　　eine Draufsicht gemäß Fig. 1,

Fig. 3　　eine erste Seitenansicht gemäß Fig. 1 und

Fig. 4　　eine zweite Seitenansicht gemäß Fig. 1,

Fig. 5　　eine Seitenansicht einer zweiten Torsionssonotrode,

Fig. 5a　eine Eigenschwingung der Wellenlänge λ bei der zweiten Torsionssonotrode,

Fig. 6　　eine Draufsicht gemäß Fig. 5,

Fig. 7　　eine Schnittansicht gemäß der Schnittlinie A-A in Fig. 5,

Fig. 8　　eine perspektivische Ansicht einer dritten Torsionssonotrode,

Fig. 9　　eine Seitenansicht gemäß Fig. 8,

Fig. 10　eine Draufsicht gemäß Fig. 8,

Fig. 11　eine Schnittansicht gemäß der Schnittlinie A-A in Fig. 9 und

Fig. 12　eine schematische Ansicht einer Ultraschall-Schweißvorrichtung.

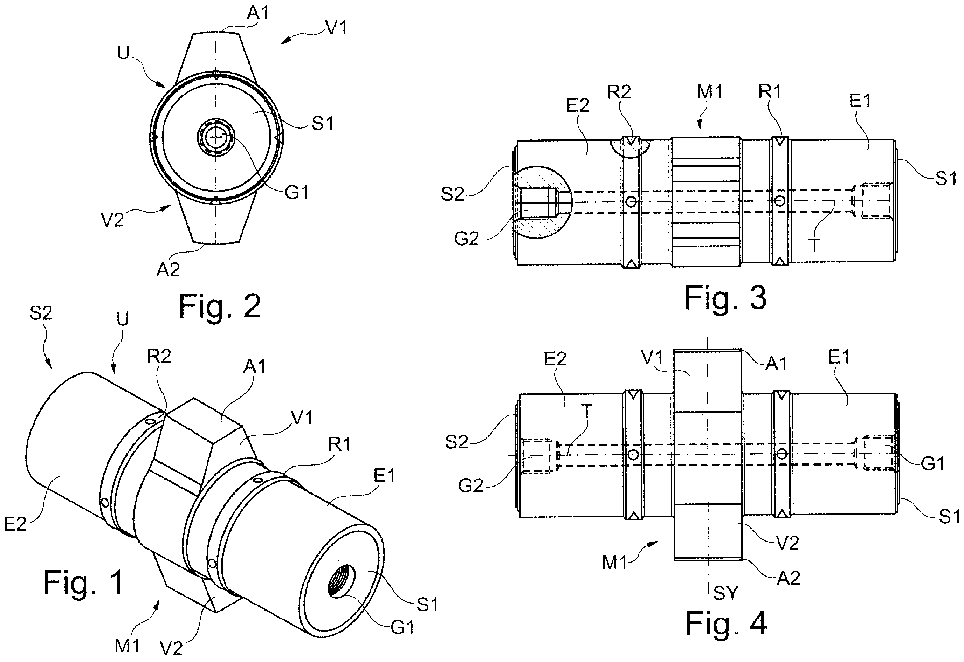

Die in den Fig. 1 bis 4 gezeigte erste Torsionssonotrode weist zwei einander gegenüberliegende runde Stirnseiten S1, S2 auf, durch deren Mittelpunkt sich zentrisch eine erste G1 und eine zweite Gewindebohrung G2 erstreckt. Eine die Stirnseite S1 und S2 verbindende Umfangsfläche U ist hier zylindrisch ausgebildet. Die Umfangsfläche U ist eine zumindest abschnittsweise gedachte Fläche, die in ihrer Querschnittsgeometrie im Wesentlichen der Geometrie der Stirnseiten entspricht. Die erste Torsionssonotrode weist zwei im Wesentlichen zylindrisch ausgebildete Endabschnitte E1, E2 auf. Ein erster Endabschnitt E1 ist durch die erste Stirnseite S1 und ein zweiter Endabschnitt E2 durch die zweite Stirnseite S2 begrenzt. Zwischen den Endabschnitten E1, E2 befindet sich ein Mittelteil M mit zwei von der Umfangsfläche U vorspringenden, einander gegenüberliegenden ambossartigen Vorsprüngen V1, V2. Ein erster Vorsprung V1 weist eine erste Arbeitsfläche A1 und ein zweiter Vorsprung V2 eine zweite Arbeitsfläche A2 auf. Ein radialer Abstand der Arbeitsflächen A1, A2 von einer mit dem Bezugszeichen T bezeichneten Torsionsachse ist vorteilhafterweise größer als ein Radius der Umfangsfläche U. Er beträgt beispielsweise 50 bis 100 mm, vorzugsweise 60 bis 90 mm. Ein Radius der Umfangsfläche kann 30 bis 70 mm, vorzugsweise 40 bis 60 mm, betragen.

Beidseits des Mittelteils M sind an den Endstücken E1, E2 von der Umfangsfläche U radial vorspringende Ringflächen R1, R2 vorgesehen.

Die erste Torsionssonotrode ist bezüglich der in Fig. 4 gezeigten Symmetrieebene SY symmetrisch ausgebildet. Die Symmetrieebene SY steht senkrecht auf einer mit dem Bezugszeichen T bezeichneten Torsionsachse. Die Endstücke E1, E2 sind hier im Wesentlichen bezüglich der Torsionsachse T rotationssymmetrisch ausgebildet.

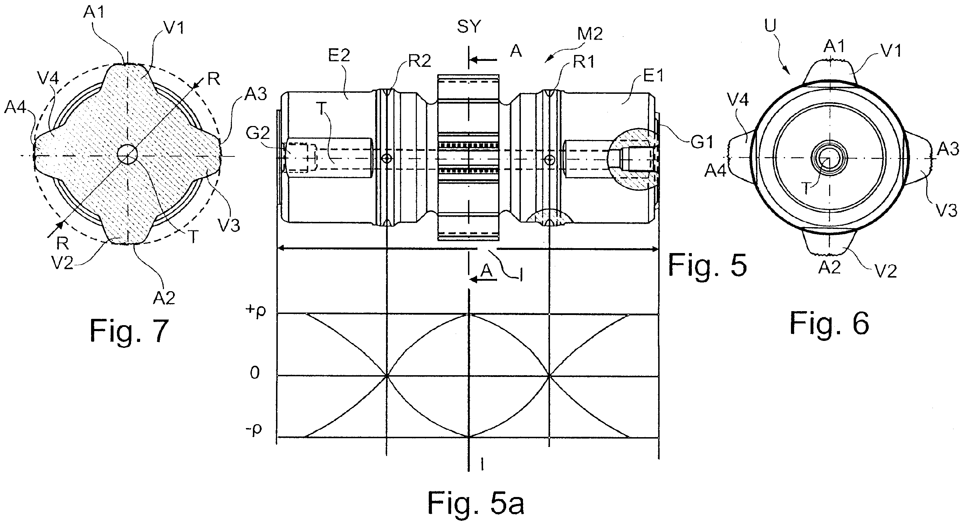

Die in den Fig. 5 bis 7 gezeigte zweite Torsionssonotrode weist zwischen den Endstücken E1, E2 ein zweites Mittelteil M2 auf, welches über den Umfang verteilt vier ambossartige Vorsprünge V1, V2, V3, V4 auf

weist. Die Vorsprünge V1, V2, V3, V4 sind jeweils um einen Winkel von 90° versetzt zueinander angeordnet. Sie sind bezüglich der Symmetrieebene SY symmetrisch ausgebildet. Die an den Umfangsflächen jedes der Vorsprünge V1, V2, V3, V4 vorgesehenen Arbeitsflächen A1, A2, A3, A4 sind in Umfangsrichtung gekrümmt ausgebildet. Deren Krümmungsradius erstreckt sich von der Torsionsachse T und ist in Fig. 7 mit dem Bezugszeichen R bezeichnet. Wie insbesondere aus Fig. 7 des Weiteren ersichtlich ist, weist jede der Arbeitsflächen A1, A2, A3, A4 eine Struktur auf, welche beispielsweise durch axial verlaufende Rillen gebildet sein kann.

Wie insbesondere in Zusammensicht mit Fig. 5 ersichtlich ist, ist eine axiale Länge l der Torsionssonotrode so gewählt, dass sich bei einer vorgegebenen Ultraschallfrequenz die in Fig. 5a gezeigte stehende Schwingungen mit der Wellenlänge λ ergibt. Fig. 5a zeigt die Amplitude +/- ρ beider entgegengesetzter Schwingungszustände über der Länge l der Torsionssonotrode. Die Nulldurchgänge der stehenden Schwingung bilden Knotenlinien, auf denen die Ringflächen R1, R2 sich befinden. Die Torsionssonotrode schwingt derart, dass sich die Endstücke E1, E2 jeweils entgegengesetzt zum Mittelteil M2 bewegen.

In Abweichung von der in den Fig. 5 bis 7 gezeigten Ausgestaltung kann es auch sein, dass anstelle der Vorsprünge V1, V2, V3, V4 ein einziger (hier nicht gezeigter) ringartiger Vorsprung vorgesehen ist, auf dem eine umlaufende Arbeitsfläche (hier nicht gezeigt) ausgebildet ist. Ferner ist es auch denkbar, dass anstelle der vier Vorsprünge V1, V2, V3, V4 sechs oder acht Vorsprünge vorgesehen sein können.

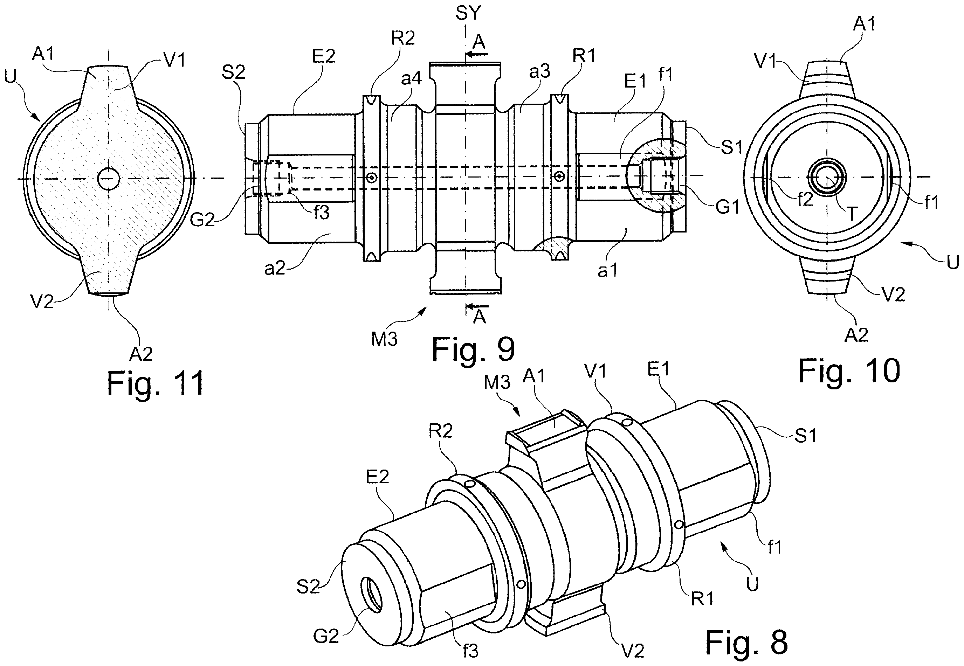

Fig. 8 bis 11 zeigen eine dritte Torsionssonotrode. Bei der dritten Torsionssonotrode weisen die Endstücke E1, E2 in einem bezüglich der Ringflächen R1, R2 außenliegenden Abschnitt a1, a2 einen kleineren Durchmesser auf als ein in der Nähe eines dritten Mittelteils M3 befindlichen inneren Abschnitts a3, a4. Wegen der bezüglich der Ringflächen R1, R2 unterschiedlichen Ausgestaltung der Durchmesser der Endstücke E1, E2 haben diese die Wirkung eines Boosters. Ferner sind an den äußeren Abschnitten a1, a2 einander gegenüberliegende und parallel zueinander ausgerichtete Flächen f1, f2 sowie f3 und (hier nicht gezeigt) f4 vorgesehen. Die Flächen f1 bis f4 dienen dem Eingriff eines Werkzeugs.

Die in den Ausführungsbeispielen gezeigten Torsionssonotroden sind vorteilhafterweise aus einem Stück aus Metall hergestellt. Obwohl es in den vorstehenden Figuren nicht gezeigt ist, kann es aber auch sein, dass das Mittelteil M1, M2 mit den Endstücken E1, E2 lösbar, beispielsweise mittels einer Schraubverbindung verbunden ist. Die Stirnseiten S1, S2 können ferner mit radial verlaufenden Strukturen, beispielsweise Nuten, Stegen, Ausnehmungen, Zapfen oder dgl. versehen sein, welche eine spielfreie Verbindung mit einem Booster oder einem Torsionsstab ermöglicht.

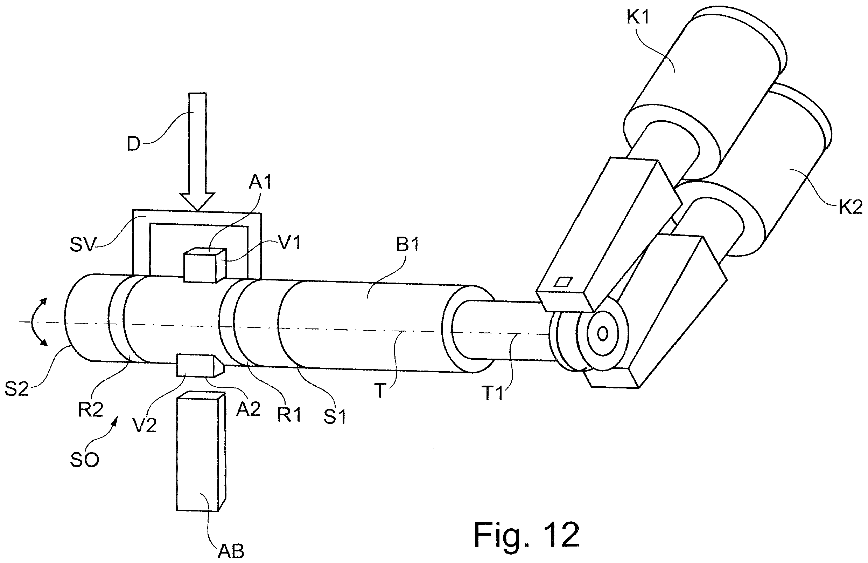

Fig. 12 zeigt schematisch in einer perspektivischen Ansicht den Aufbau einer Ultraschall-Schweißvor

richtung unter Verwendung einer erfindungsgemäßen Torsionssonotrode, welche in Fig. 12 allgemein mit dem Bezugszeichen SO bezeichnet ist. Die Torsionssonotrode SO ist an ihrer ersten Stirnseite S1 mit einem ersten Booster B1 mittels einer Schraubverbindung fest verbundene. Der erste Booster B1 ist wiederum mittels einer Schraubverbindung mit einem ersten Torsionsstab T1 verschraubt, an dem in radial gegenüberliegender Anordnung ein erster K1 und ein zweiter Konverter K2 angeschlossen sind. Mit dem Bezugszeichen AB ist ein Amboss bezeichnet, welcher bezüglich der Torsionssonotrode SO feststehend angeordnet ist. Eine hier schematisch angedeutete Stützvorrichtung SV umgreift, beispielsweise klemmend, die Ringflächen R1, R2. Die Stützvorrichtung SV ist mit einer Druckeinrichtung D verbunden, mit der die aus Konverter K1, K2, Torsionsstab T1, Booster B1 und Torsionssonotrode SO gebildete Ultraschallschwingungseinrichtung vertikal bezüglich des Ambosses AB bewegbar ist und mit der ein Druck auf die zweite Arbeitsfläche A2 bzw. zwischen der zweiten Arbeitsfläche A2 und dem Amboss AB eingelegten zu verbindenden Bauteilen (hier nicht gezeigt) ausgeübt werden kann.

Die Funktion der Ultraschall-Schweißvorrichtung ist folgende:

Mit den Konvertern K1, K2, welche in gegenläufiger Phase betrieben werden, wird im ersten Torsionsstab T1 eine um die Torsionsachse T gerichtete Torsionsschwingung erzeugt, die Torsionsschwingung wird über den ersten Booster B1 auf die Torsionssonotrode SO übertragen. Infolgedessen schwingen die Vorsprünge V1, V2 bzw. die daran vorgesehenen Arbeitsflächen A1, A2 auf einem Kreisbahnabschnitt um die Torsionsachse T. Eine Position der Vorsprünge V1, V2 in Axialrichtung bleibt dabei im Wesentlichen unverändert. Zur Herstellung einer Schweißverbindung werden zwei zu verbindende Bauteile (hier nicht gezeigt) auf den Amboss AB gelegt. Sodann wird mittels der Druckeinrichtung D die zweite Arbeitsfläche A2 der Torsionssonotrode SO auf die übereinanderliegenden Bauteile gedrückt. Durch Inbetriebnahme der Konverter K1, K2 wird eine Torsionsschwingung erzeugt, mit der die Bauteile relativ zueinander verschoben werden. Durch die erzeugte Reibung wird eine Schweißverbindung hergestellt.

Obwohl es in Fig. 12 nicht gezeigt ist, kann selbstverständlich auch die zweite Stirnseite S2 der Torsionssonotrode SO über einen zweiten Booster B2 (hier nicht gezeigt) und einen zweiten Torsionsstab T2 (hier nicht gezeigt) mit dritten und vierten Konvertern K3, K4 (hier nicht gezeigt) verbunden sein.

Die aus Konvertern, Boostern und Torsionssonotrode gebildete Ultraschallschwingungseinrichtung kann auch feststehend angeordnet sein. In diesem Fall kann der Amboss AB vertikal bewegbar und mit einer Druckeinrichtung versehen sein. Ferner ist es auch denkbar, zwei Ultraschallschwingungseinrichtungen in einander gegenüberliegender Anordnung zur Herstellung einer Schweißverbindung zu betreiben. In diesem Fall ist anstelle des Ambosses AB also eine weitere Torsionssonotrode vorgesehen. Dabei schwingen die einander gegenüberliegenden Torsionssonotroden gegenläufig.

Bezugszeichenliste

| | |
|---|---|
| a1, a2 | äußerer Abschnitt |
| a3, a4 | innerer Abschnitt |
| A1, A2, A3, A4 | Arbeitsfläche |
| AB | Amboss |
| B1 | erster Booster |
| D | Druckeinrichtung |
| E1 | erstes Endstück |
| E2 | zweites Endstück |
| G1, G2 | Gewinde |
| f1, f2, f3, f4 | Flächen |
| K1 | erster Konverter |
| K2 | zweiter Konverter |
| I | axiale Länge der Torsionssonotrode |
| M1 | erstes Mittelteil |
| M2 | zweites Mittelteil |
| M3 | drittes Mittelteil |
| R | Krümmungsradius |
| R1 | erste Ringfläche |
| R2 | zweite Ringfläche |
| S1 | erste Stirnseite |
| S2 | zweite Stirnseite |
| SO | Torsionssonotrode |
| SV | Stützvorrichtung |
| SY | Symmetrieebene |
| T | Torsionsachse |
| T1 | erster Torsionsstab |
| U | Umfangsfläche |
| V1, V2, V3, V4 | Vorsprung |

**Patentansprüche**

1.  Ultraschall-Schweißvorrichtung, umfassend eine Torsionssonotrode mit zwei einander gegenüberliegenden Stirnseiten (S1, S2) und einer eine Torsionsachse (T) umgebenden Umfangsfläche (U), an der zumindest eine Arbeitsfläche (A1, A2, A3, A4) in einem radialen Abstand (R) von der Torsionsachse (T) vorgesehen ist, wobei zumindest ein Konverter (K1, K2) mit einer der beiden Stirnseiten (S1, S2) der Torsionssonotrode (SO) zur Erzeugung einer um die Torsionsachse (T) gerichteten Ultraschallschwingung gekoppelt ist, **dadurch gekennzeichnet, dass** an der Umfangsfläche (U) beidseits der zumindest einen Arbeitsfläche (A1, A2, A3, A4) jeweils eine Ringfläche (R1, R2) vorgesehen ist, welche bezüglich einer Wellenlänge einer Eigenschwingung der Torsionssonotrode auf einer Knotenlinie liegt,

wobei eine Druckeinrichtung (D) zur Erzeugung eines im Wesentlichen senkrecht zur Torsionsachse (T) wirkenden Drucks vorgesehen ist und

wobei die Torsionssonotrode (SO) mit den daran vorgesehenen Ringflächen (R1, R2) in einer Stützvorrichtung (SV) abgestützt ist und die Stützvorrichtung (SV) mit der Druckeinrichtung (D) verbunden ist.

2.　Ultraschall-Schweißvorrichtung nach Anspruch 1, wobei der Konverter (K1, K2) radial mit einem Torsionsschwingelement (T1) verbunden ist, welches an eine der Stirnseiten (S1, S2) der Torsionssonotrode (SO) gekoppelt ist.

3.　Ultraschall-Schweißvorrichtung nach Anspruch 2, wobei das Torsionsschwingelement (T1) unter Zwischenschaltung eines Boosters (B1) mit der Stirnseite (S1, S2) der Torsionssönotrode (SO) verbunden ist.

4.　Ultraschall-Schweißvorrichtung nach einem der vorhergehenden Ansprüche, wobei ein weiterer Konverter zur Erzeugung einer um die Torsionsachse (T) gerichteten Ultraschallschwingung an die andere der Stirnseiten (S1, S2) der Torsionssonotrode (SO) gekoppelt ist.

5.　Ultraschall-Schweißvorrichtung nach Anspruch 4, wobei der weitere Konverter radial mit einem weiteren Torsionsschwingelement verbunden ist, welches an die andere Stirnseite (S1, S2) der Torsionssonotrode (SO) gekoppelt ist.

6.　Ultraschall-Schweißvorrichtung nach Anspruch 5, wobei das weitere Torsionsschwingelement unter Zwischenschaltung eines weiteren Boosters mit der anderen Stirnseite (S1, S2) der Torsionssonotrode (SO) verbunden ist.

7.　Ultraschall-Schweißvorrichtung nach einem der vorhergehenden Ansprüche, wobei die Torsionssonotrode bezüglich einer senkrecht durch die Torsionsachse (T) verlaufenden Symmetrieebene (SY) symmetrisch ausgebildet ist.

8.　Ultraschall-Schweißvorrichtung nach Anspruch 7, wobei eine Kontur der zumindest einen Arbeitsfläche (A1, A2, A3, A4) der Torsionssonotrode bezüglich der Symmetrieebene (SY) symmetrisch ausgebildet ist.

9.　Ultraschall-Schweißvorrichtung nach einem der vorhergehenden Ansprüche, wobei ein die zumindest eine Arbeitsfläche (A1, A2, A3, A4) umfassendes Mittelteil (M1, M2, M3) vorgesehen ist, welches lösbar mit beidseits davon sich erstreckenden, jeweils eine der Stirnseiten (S1, S2) aufweisenden Endstücken (E1, E2) verbunden ist.

10.　Ultraschall-Schweißvorrichtung nach einem der vorhergehenden Ansprüche, wobei die zumindest eine Arbeitsfläche (A1, A2, A3, A4) mit einem vorgegeben Radius (R) in Umfangsrichtung gekrümmt ist.

11.　Ultraschall-Schweißvorrichtung nach einem der vorhergehenden Ansprüche, wobei die Arbeitsfläche (A1, A2, A3, A4) eine radial vorspringende, umlaufende Ring-Arbeitsfläche ist.

12.　Ultraschall-Schweißvorrichtung nach einem der vorhergehenden Ansprüche, wobei die Ringflächen (R1, R2) radial vorspringend ausgebildet sind.

13.　Ultraschall-Schweißvorrichtung nach einem der vorhergehenden Ansprüche, wobei n Arbeitsflächen (A1, A2, A3, A4) vorgesehen sind, welche gleichmäßig über den Umfang in einem Winkel von 360°/n angeordnet sind, wobei n eine ganze Zahl > 1 ist.

14.　Ultraschall-Schweißvorrichtung nach einem der vorhergehenden Ansprüche, wobei die zumindest eine Arbeitsfläche (A1, A2, A3, A4) eine Struktur, vorzugsweise Rillen, aufweist oder mit polykristallinem Diamant beschichtet ist.

15.　Verfahren zur Herstellung einer Schweißverbindung mittels einer Ultraschall -Schweissvorrichtung nach einem der vorhergehenden Ansprüche mit folgenden Schritten:

- Bereitstellen der Torsionssonotrode,
- Anordnen zweier miteinander zu verschweißender Bauteile zwischen der Arbeitsfläche (A1, A2, A3, A4) und einer Unterlage (AB),
- Ausübung eines im Wesentlichen senkrecht zur Torsionsachse (T) wirkenden Drucks, so dass die miteinander zu verschweißenden Bauteile zwischen der Arbeitsfläche (A1, A2, A3, A4) und der Unterlage (AB) eingeklemmt werden, und
- Erzeugung einer Ultraschallschwingung um die Torsionsachse (T), so dass die Arbeitsfläche (A1, A2, A3, A4) um die Torsionsache (T) auf einer gebogenen Bahn schwingt und durch die damit auf die zu verschweißenden Bauteile ausgeübte Reibungskraft eine Schweißverbindung hergestellt wird.

**Claims**

1.　An ultrasonic welding device, comprising a torsion sonotrode having two mutually opposed end faces (S1, S2) and a circumferential surface (U) which surrounds a torsion axis (T) and on which at least one working surface (A1, A2, A3, A4) is provided at a radial distance (R) from the torsion axis (T), wherein at least one converter (K1, K2) is coupled to one of the two end faces (S1, S2) of the torsion sonotrode (SO) to generate an ultrasonic vibration directed about the torsion axis (T),

**characterized in that**

an annular surface (R1, R2) is provided on the circumferential surface (U) on either side of the at least one working surface (A1, A2, A3, A4) and lies over a nodal line with respect to a wavelength of a natural vibration of the torsion sonotrode, wherein a pressure device (D) is provided to generate a pressure on the working surface (A1, A2, A3, A4) acting substantially perpendicular to the torsion axis (T) and wherein the torsion sonotrode (SO) is supported in a supporting device (SV) via the annular surfaces (R1, R2) provided on said sonotrode and the supporting device (SV) is connected to the pressure device (D).

2. The ultrasonic welding device according to claim 1, wherein the converter (K1, K2) is connected radially to a torsional vibration element (T1) which is coupled to one of the end faces (S1, S2) of the torsion sonotrode (SO).

3. The ultrasonic welding device according to claim 2, wherein the torsional vibration element (T1) is connected to the end face (S1, S2) of the torsion sonotrode (SO) with interpositioning of a booster (B1).

4. The ultrasonic welding device according to one of the preceding claims, wherein a further converter is coupled to the other of the end faces (S1, S2) of the torsion sonotrode (SO) to generate an ultrasonic vibration directed about the torsion axis (T).

5. The ultrasonic welding device according to claim 4, wherein the further converter is connected radially to a further torsional vibration element which is coupled to the other end face (S1, S2) of the torsion sonotrode (SO).

6. The ultrasonic welding device according to one of claim 5, wherein the further torsional vibration element is connected to the other end face (S1, S2) of the torsion sonotrode (SO) with interpositioning of a further booster.

7. The ultrasonic welding device according to one of the preceding claims, wherein the torsion sonotrode is symmetric with respect to a symmetry plane (SY) running perpendicular through the torsion axis (T).

8. The ultrasonic welding device according to claim 7, wherein a contour of the at least one working surface (A1, A2, A3, A4) is symmetrical about the plane of symmetry (SY).

9. The ultrasonic welding device according to one of the preceding claims, wherein a central part (M1, M2, M3) comprising the at least one working surface (A1, A2, A3, A4) is provided and is connected releasably to end pieces (E1, E2) extending from either side thereof and each having one of the end faces (S1, S2).

10. The ultrasonic welding device according to one of the preceding claims, wherein the at least one working surface (A1, A2, A3, A4) is curved in the circumferential direction with a predefined radius (R).

11. The ultrasonic welding device according to one of the preceding claims, wherein the working surface (A1, A2, A3, A4) is a radially protruding, circumferential annular working surface.

12. The ultrasonic welding device according to one of the preceding claims, wherein the annular surfaces (R1, R2) are radially protruding.

13. The ultrasonic welding device according to one of the preceding claims, wherein n working surfaces (A1, A2, A3, A4) are provided, which are arranged uniformly over the circumference at an angle of 360°/n, wherein n is an integer >1.

14. The ultrasonic welding device according to one of the preceding claims, wherein the at least one working surface (A1, A2, A3, A4) has a structure, preferably ribs, or is coated with polycrystalline diamond.

15. A method for producing a welded connection by means of an ultrasonic welding device according to one of the preceding claims, comprising the following steps:

- providing the torsion sonotrode,
- arranging two components to be welded together between the working surface (A1, A2, A3, A4) and a substrate (AB),
- exerting a pressure acting substantially perpendicular to the torsion axis (T), so that the components to be welded together are clamped between the working surface (A1, A2, A3, A4) and the substrate (AB), and
- generating an ultrasonic vibration about the torsion axis (T), so that the working surface (A1, A2, A3, A4) vibrates about the torsion axis (T) over a curved path and a welded connection is produced by the frictional force thus exerted onto the components to be welded.

**Revendications**

1. Dispositif de soudage par ultrasons, comprenant une sonotrode travaillant en torsion et présentant deux côtés frontaux (S1, S2) mutuellement opposés et une surface périphérique (U) entourant un axe de torsion (T), et sur laquelle au moins une surface de travail (A1, A2, A3, A4) est prévue à une distance radiale (R) de l'axe de torsion (T), une surface annulaire (R1, R2) qui est située sur une ligne nodale d'une longueur d'onde d'une oscillation propre de la sonotrode travaillant en torsion étant prévue sur la surface périphérique (U) de chaque côté de la ou des surfaces de travail (A1, A2, A3, A4), au moins un convertisseur (K1, K2) étant couplé à l'un des deux côtés frontaux (S1, S2) de la sonotrode (SO) travaillant en torsion pour former une oscillation ultrasonique orientée autour de l'axe de torsion (T), **caractérisé en ce que** un dispositif de poussée (D) qui forme une poussée qui agit essentiellement à la perpendiculaire de l'axe de torsion (T) est prévu et **en ce que** la sonotrode (SO) travaillant en torsion et les surfaces annulaires (R1, R2) qui y sont prévues sont soutenues dans un ensemble de soutien (SV), l'ensemble de soutien (SV) étant relié au dispositif de poussée (D).

2. Dispositif de soudage par ultrasons selon la revendication 1, dans lequel le convertisseur (K1, K2) est relié radialement à un élément (T1) oscillant en torsion qui est couplé à l'une des surfaces frontales (S1, S2) de la sonotrode (SO) travaillant en torsion.

3. Dispositif de soudage par ultrasons selon la revendication 2, dans lequel l'élément (T1) oscillant en torsion est relié par l'intermédiaire d'un amplificateur (B1) au côté frontal (S1, S2) de la sonotrode (SO) travaillant en torsion.

4. Dispositif de soudage par ultrasons selon l'une des revendications précédentes, dans lequel un autre convertisseur qui forme une vibration ultrasonique orientée autour de l'axe de torsion (T) est couplé à l'autre côté frontal (S1, S2) de la sonotrode (SO) travaillant en torsion.

5. Dispositif de soudage par ultrasons selon la revendication 4, dans lequel l'autre convertisseur est relié radialement à un autre élément oscillant en torsion qui est couplé à l'autre côté frontal (S1, S2) de la sonotrode (SO) travaillant en torsion.

6. Dispositif de soudage par ultrasons selon la revendication 5, dans lequel l'autre élément oscillant en torsion est relié à l'autre côté frontal (S1, S2) de la sonotrode (SO) travaillant en torsion par l'intermédiaire d'un autre amplificateur.

7. Dispositif de soudage par ultrasons selon l'une des revendications précédentes, dans lequel la sonotrode travaillant en torsion est symétrique par rapport à un plan de symétrie (SY) qui s'étend perpendiculairement à l'axe de torsion (T).

8. Dispositif de soudage par ultrasons selon la revendication7, dans lequel un contour de la ou des surfaces de travail (A1, A2, A3, A4) de la sonotrode travaillant en torsion est symétrique par rapport au plan de symétrie (SY).

9. Dispositif de soudage par ultrasons selon l'une des revendications précédentes, qui présente une partie centrale (M1, M2, M3) qui comprend la ou les surfaces de travail (A1, A2, A3, A4) et qui est reliée de manière libérable à des pièces d'extrémité (E1, E2) qui en débordent et qui présentent chacune l'un des côtés frontaux (S1, S2).

10. Dispositif de soudage par ultrasons selon l'une des revendications précédentes, dans lequel la ou les surfaces de travail (A1, A2, A3, A4) sont incurvées à un rayon prédéterminé (R) dans la direction périphérique.

11. Dispositif de soudage par ultrasons selon l'une des revendications précédentes, dans lequel la surface de travail (A1, A2, A3, A4) est une surface de travail annulaire périphérique en saillie radiale.

12. Dispositif de soudage par ultrasons selon l'une des revendications précédentes, dans lequel les surfaces annulaires (R1, R2) sont en saillie radiale.

13. Dispositif de soudage par ultrasons selon l'une des revendications précédentes, dans lequel n surfaces de travail (A1, A2, A3, A4) sont prévues et sont disposées régulièrement à la périphérie à un intervalle angulaire de 360°/n, n étant un nombre entier > 1.

14. Dispositif de soudage par ultrasons selon l'une des revendications précédentes, dans lequel la ou les surfaces de travail (A1, A2, A3, A4) présentent une structure, de préférence des rainures, ou sont revêtues de diamant polycristallin.

15. Procédé de fabrication d'une liaison soudée au moyen d'un ensemble de soudage à ultrasons selon l'une des revendications précédentes, le procédé présentant les étapes suivantes :

prévoir la sonotrode travaillant en torsion, disposer deux composants qui doivent être soudés l'un à l'autre entre la surface de travail (A1, A2, A3, A4) et un support (AB), exercer une poussée qui agit essentiellement perpendiculairement à l'axe de torsion (T) de telle sorte que les composant qui doivent être soudés l'un à l'autre soient serrés entre la surface de travail (A1, A2, A3, A4) et le support (AB) et

produire une vibration ultrasonique autour de l'axe de torsion (T) de telle sorte que la surface de travail (A1, A2, A3, A4) oscille sur un parcours courbe autour de l'axe de torsion (T) et qu'une liaison soudée soit ainsi établie par la force de frottement exercée sur les composants à souder.

Fig. 3

Fig. 4

Fig. 2

Fig. 1

Fig. 6

Fig. 5

Fig. 5a

Fig. 7

Fig. 10

Fig. 8

Fig. 9

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3039333 A
- US 5603444 A

- EP 1930148 A1